(19) Europäisches Patentamt
European Patent Office
Office européen des brevets

(11) **EP 1 273 878 B1**

(12) **EUROPÄISCHE PATENTSCHRIFT**

(45) Veröffentlichungstag und Bekanntmachung des Hinweises auf die Patenterteilung:
**09.01.2008 Patentblatt 2008/02**

(51) Int Cl.:
***G01B 11/02*** *(2006.01)*

(21) Anmeldenummer: **02100757.0**

(22) Anmeldetag: **27.06.2002**

(54) **Verfahren zur Detektion eines Objektes mit unterschiedlichen Auflösungen**

Procedure to detect an object using different resolutions

Procédé pour détecter un objet en utilisant de résolutions différentes

(84) Benannte Vertragsstaaten:
**DE FR GB**

(30) Priorität: **02.07.2001 DE 10131508**

(43) Veröffentlichungstag der Anmeldung:
**08.01.2003 Patentblatt 2003/02**

(73) Patentinhaber: **Vistec Semiconductor Systems GmbH**
**35781 Weilburg (DE)**

(72) Erfinder: **RINN, Klaus, Dr.**
**35452, Heuchelheim (DE)**

(74) Vertreter: **Reichert, Werner Franz et al**
**Reichert & Benninger**
**Patentanwälte**
**Postfach 10 01 54**
**93001 Regensburg (DE)**

(56) Entgegenhaltungen:
**EP-A- 0 819 964     WO-A-96/37797**
**US-A- 6 031 661     US-A- 6 151 127**

EP 1 273 878 B1

**Beschreibung**

Die vorliegende Erfindung betrifft ein Verfahren zur Detektion eines Objekts, mit einer das Objekt beleuchtenden Lichtquelle und einem das Objekt auf einen Detektor abbildenden Abbildungssystem.

Verfahren und insbesondere Mikroskope der gattungsbildenden Art sind seit geraumer Zeit aus der Praxis bekannt. In industriellen Anwendungen, beispielsweise bei der Metrologie von Linienbreiten oder Positionen auf Substraten der Halbleiterindustrie, kommen Koordinaten-Messgeräte zum Einsatz, wie sie beispielsweise in der deutschen Patentanmeldung DE 198 19 492.7-52 beschrieben sind. Dieses Messgerät dient zur hochgenauen Messung der Koordinaten von Strukturen auf Substraten, z.B. Masken, Wafern, Flachbildschirmen und Aufdampfstrukturen, insbesondere aber für transparente Substrate. Die Koordinaten werden relativ zu einem Bezugspunkt auf wenige Nanometer genau bestimmt.

Das U.S. Patent 6,151,127 offenbart ein Konfokalmikroskop mit dem eine Ebene in einem Gewebe abgebildet werden kann.

Das U.S. Patent 6,031,661 offenbart ebenfalls ein Konfokalmikroskop, mit dem die Oberfläche eines Objekts abgebildet wird. Hierzu wird das Objekt axial verschoben, um andere Bereiche des Objekts in die Brennebene zu bringen.

Das Dokument WO 96/37797 offenbart ein Mikroskopsystem, mit dem Bilder eines Objekts bei einer Wellenlänge auf einen Detektor abgebildet werden. Bilder, die nacheinander bei unterschiedlichen Wellenlängen aufgenommen werden, können überlagert werden.

Bei der Metrologie von Linienbreiten oder Positionen auf Substraten der Halbleiterindustrie werden zur Extraktion charakteristischer Messparameter die detektierten Bilder digital verarbeitet. Hierzu wird ein zu vermessendes Objekt - üblicherweise ein Wafer oder eine Belichtungsmaske zur Herstellung eines Wafers - mit Licht der Wellenlänge 365 nm beleuchtet. Das so beleuchtete Objekt wird mit einem Objektiv des Mikroskops auf einen Detektor abgebildet, wobei der Detektor üblicherweise als CCD-Kamera ausgebildet ist.

Das erzielbare Auflösungsvermögen eines solchen Abbildungssystems ist im wesentlichen abhängig von der verwendeten Wellenlänge des Lichts und von der numerischen Apertur des Objektivs. So müsste zur Erhöhung des Auflösungsvermögens des Abbildungssystems die numerische Apertur vergrößert werden, was jedoch bei den heutigen Mikroskopobjektiven kaum noch möglich ist, da man an der Grenze des optisch und feinmechanisch machbaren weitgehend angelangt ist. Die Verwendung kleiner Wellenlängen des Lichts erfordert den Einsatz spezieller Optiken und optischer Komponenten, so dass auch hierbei nicht Licht beliebig kleiner Wellenlängen verwendet werden kann.

Der vorliegenden Erfindung liegt daher die Aufgabe zugrunde, ein gattungsbildendes Verfahren zur Detektion eines Objekts anzugeben und weiterzubilden, das eine Erhöhung des effektiven Auflösungsvermögens des Abbildungssystems ermöglicht, das über die Grenze des von den Eigenschaften des Abbildungssystems festgelegten Auflösungsvermögens hinausgeht.

Das erfindungsgemäße Verfahren der gattungsbildenden Art löst die voranstehende Aufgabe durch die Merkmale des Patentanspruchs 1.

Erfindungsgemäß ist zunächst erkannt worden, dass es sehr schwierig ist, die optische Auflösung eines Abbildungssystems zu verbessern. Dagegen kann das maximale Auflösungsvermögen eines Abbildungssystems relativ einfach verschlechtert werden, beispielsweise durch das Verringern der numerischen Apertur des Abbildungssystems mit Hilfe einer entsprechenden, im Strahlengang angeordneten Aperturblende. Erfindungsgemäß wird das abzubildende Objekt mehrmals mit jeweils unterschiedlicher Auflösung des Abbildungssystems detektiert, so dass vom gleichen Objekt Bilddaten unterschiedlicher Auflösung vorliegen. Diese detektierten Bilddaten werden sodann einer statistischen und/oder numerischen Auswertung zugeführt. Hierbei kann das Ergebnis der statistischen und/oder numerischen Auswertung ein Bild, ein charakteristischer Parameter oder ein Messwert des Objekts bei einem Auflösungsvermögen des Abbildungssystems sein, das nicht einstellbar ist oder das nicht bei den Detektionen eingestellt wurde. Weiterhin könnte vorgesehen sein, dass das Ergebnis der statistischen und/oder numerischen Auswertung eine Aussage ist, mit welchem Auflösungsvermögen des Abbildungssystems das zuvor aufgenommene

Objekt optimal abzubilden ist, um beispielsweise andere Objekte vergleichbarer Art bei diesem optimierten Auflösungsvermögen aufzunehmen.

Nun könnte das Auflösungsvermögen des Abbildungssystems durch Variation der Wellenlänge des Beleuchtungslichts verändert werden. Insbesondere bei Mikroskopen könnte beispielsweise aus dem Spektrum einer zur Objektbeleuchtung dienenden Quecksilberdampflampe mit Hilfe von geeigneten Farbfiltern Licht unterschiedlicher Wellenlängen selektiert werden, mit dem das Objekt bei den einzelnen Objektdetektionen beleuchtet wird. Weiterhin könnten zur Objektbeleuchtung mehrere Lichtquellen vorgesehen sein, die Licht unterschiedlicher Wellenlängen emittieren. Entsprechend der jeweils eingekoppelten Wellenlänge des Beleuchtungslichts verändert sich das Auflösungsvermögen des Abbildungssystems. Eine gleichzeitige Einkopplung von Licht unterschiedlicher Wellenlängen in Verbindung mit einer gleichzeitigen Detektion des Objekts könnten ebenfalls mehrere Objektdetektionen mit jeweils unterschiedlicher Auflösung des Abbildungssystems darstellen, wenn mehrere Detektoren simultan Objektdaten von Licht jeweils einer Wellenlänge detektieren. Insoweit wären entsprechende wellenlängenselektive Strahlteiler im Strahlengang des Abbildungssystems vor den jeweiligen Detektoren vorzusehen.

Alternativ oder zusätzlich könnte das Auflösungsvermögen des Abbildungssystems mit mindestens einem Mittel variiert werden. Hierzu könnte bei einem Mikroskop ein anderes, im Objektivrevolver befindliches Mikroskopobjektiv in den Abbildungsstrahlengang eingebracht werden, wobei beispielsweise Mikroskopobjektive gleicher Vergrößerung und unterschiedlicher numerischer Apertur im Objektivrevolver angeordnet sind. Als Mittel zur Variation des Auflösungsvermögens des Abbildungssystems könnte auch eine im Strahlengang des Abbildungssystems angeordnete Aperturblende mit variablem Durchmesser dienen. So wäre die mehrmalige Objektdetektion bei jeweils unterschiedlichem Durchmesser der Aperturblende durchzuführen.

Eine Veränderung des Auflösungsvermögens des Abbildungssystems könnte auch dadurch erzielt werden, dass die Auflösung der detektierten Bilder mit Methoden der digitalen Bildverarbeitung bzw. numerisch verschlechtert wird. Hierbei ist eine Zusammenfassung mehrerer Pixel denkbar, eine Tiefpassfilterung der Bilder könnte ebenfalls vorgesehen sein. Weiterhin könnten die Bilddaten mit zwei- oder dreidimensionalen Funktionen gefaltet werden, die die Abbildung des Abbildungssystems bei jeweils unterschiedlichen Auflösungen beschreiben und die beispielsweise mittels Simulationsrechnungen berechnet wurden.

In bevorzugter Weise wird bei einem eingestellten Auflösungsvermögen des Abbildungssystems das Objekt mehrmals detektiert. Die so detektierten Bilddaten könnten einer statistischen Auswertung zugeführt werden, wodurch insbesondere der Rauschanteil bzw. der Messfehler dieser detektierten Bilddaten verringert werden kann. Insbesondere könnte die statistische Auswertung der mehrmals detektierten Bilddaten eines eingestellten Auflösungsvermögens des Abbildungssystems eine Mittelwertbildung oder eine andere statistische Gewichtung umfassen.

In ganz besonders bevorzugter Weise ist vorgesehen, dass von den detektierten Bilddaten charakteristische Parameter des Objekts extrahiert werden. Hierbei könnte es sich beispielsweise um den Rand oder um eine Fläche einer Struktur oder eines Objekts handeln. Insbesondere bei der Halbleiterinspektion ist der Rand bzw. der Randverlauf einer Leiterbahn von großem Interesse, so dass als relevanter charakteristischer Parameter die Kante einer solchen Leiterbahn zu extrahieren ist. Weiterhin könnte der Intensitätsverlauf entlang einer Kurve durch eine detektierte Struktur oder ein detektiertes Objekt von Interesse sein. Üblicherweise wird der Intensitätsverlauf entlang einer Strecke im detektierten Bild als charakteristischer Parameter extrahiert. Ebenfalls von großem Interesse ist die Lokalisation einer Struktur oder eines Objekts oder eines Teils davon, beispielsweise bei der Metrologie von Linienbreiten oder Positionen auf Substraten der Halbleiterindustrie mit Hilfe von Koordinaten-Messgeräten ist durch die Bestimmung der Lokalisation der beiden Kanten einer Leiterbahn deren Breite bestimmbar.

Die Extraktion der charakteristischen Parameter erfolgt vorzugsweise bei den Bilddaten, die jeweils mit unterschiedlich eingestelltem Auflösungsvermögen des Abbildungssystems detektiert wurden. Insoweit würde beispielsweise die Lokalisation einer Kante einer Leiterbahn jeweils bei den detektierten Bilddaten unterschiedlichen Auflösungsvermögens extrahiert werden, wobei dann für die Lokalisation der Kante erwartungsgemäß unterschiedliche Werte ermittelt werden.

Zur Bestimmung bzw. zum Erzielen eines optimierten Auflösungsvermögens des Abbildungssystems könnte in vorteilhafter Weise eine Interpolation oder Extrapolation der Werte der charakteristischen Parameter zu einem anderen, bei der Detektion nicht eingestellten Auflösungsvermögen des Abbildungssystems vorgesehen sein. Die Interpolation oder Extrapolation könnte auch anhand einer an die Werte der charakteristischen Parameter approximierten Funktion erfolgen.

Die Werte der extrahierten charakteristischen Parameter könnten als Funktion des bei der Detektion jeweils eingestellten Auflösungsvermögens des Abbildungssystems einer numerischen und/oder statistischen Auswertung zugeführt werden. Ziel einer solchen Auswertung könnte beispielsweise das Auffinden einer Funktion sein, die die Werte der charakteristischen Parameter approximiert.

Insoweit sei besonders hervorgehoben, dass das erfindungsgemäße Verfahren nicht das Ziel hat, unsichtbare Strukturen bei einem gegebenen optischen Auflösungsvermögen sichtbar zu machen, sondern durch die Vorgabe des Auflösungsvermögens des Abbildungssystems die Messfehler charakteristischer Parameter zu verringern oder zumindest zu minimieren.

Es gibt nun verschiedene Möglichkeiten, die Lehre der vorliegenden Erfindung in vorteilhafter Weise auszugestalten und weiterzubilden. Dazu wird auf die nachfolgende Erläuterung der bevorzugten Ausführungsbeispiele der Erfindung anhand der Zeichnung zu verweisen. In Verbindung mit der Erläuterung der bevorzugten Ausführungsbeispiele der Erfindung anhand der Zeichnung werden auch im Allgemeinen bevorzugte Ausgestaltungen und Weiterbildungen der Lehre erläutert. In der Zeichnung zeigen:

Fig. 1   in einem Diagramm gemessenen Linienprofile bei unterschiedlichen Beleuchtungswellenlängen und

Fig. 2   in einem Diagramm die aus den einzelnen Messungen extrahierten Linienbreiten als Funktion der Beleuchtungswellenlänge.

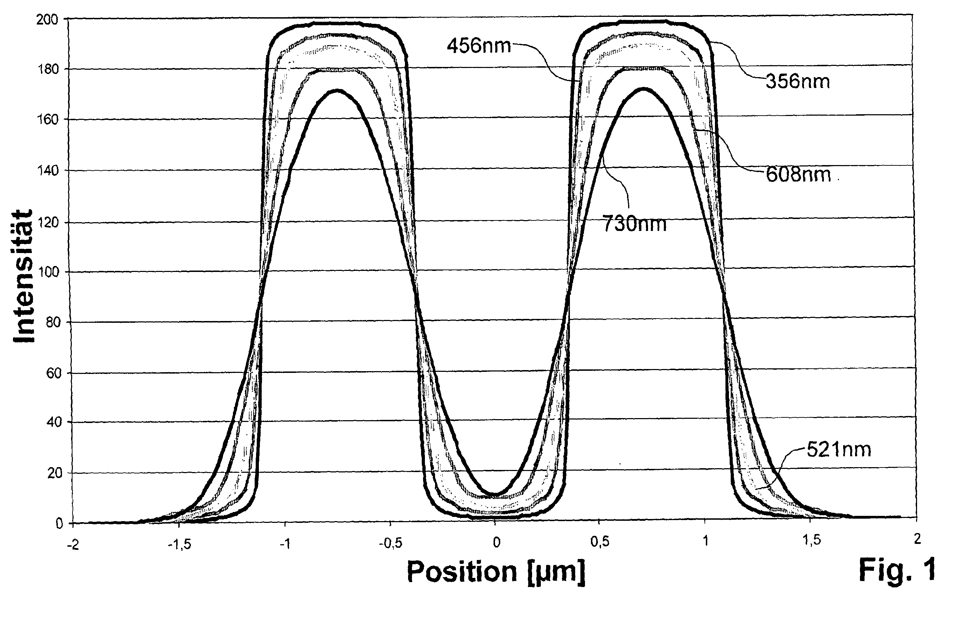

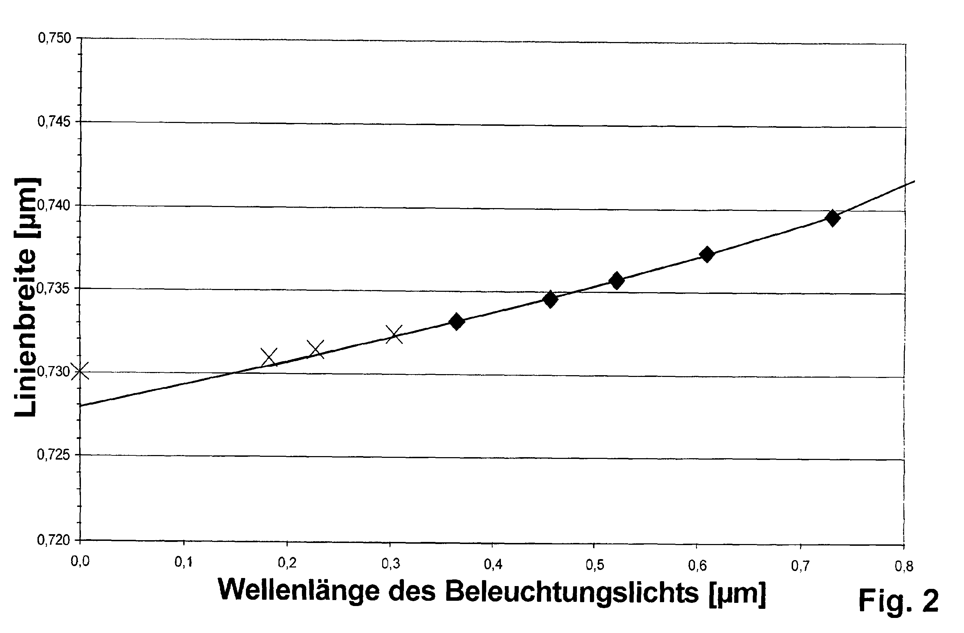

Anhand der in Fig. 1 und 2 wird das Verfahren zur Detektion eines Objekts verdeutlicht. Hierbei wurden zwei parallel verlaufende Leiterbahnen mit einem Koordinaten-Messgerät detektiert und vermessen.

In erfindungsgemäßer Weise wurden die Halbleiterbahnen mit jeweils unterschiedlichen Auflösungen des mikroskopischen Abbildungssystems bzw. des Koordinaten-Messgerät detektiert. Die so erhaltenen Bilddaten sind einer statistischen und numerischen Auswertung zugeführt worden.

Bei der Detektion wurde das Auflösungsvermögen des mikroskopischen Abbildungssystems durch Variation der Wellenlänge des Beleuchtungslichts verändert. So wurde aus der Lichtquelle des Halbleiterinspektionsmikroskops jeweils Licht der Wellenlängen 365 nm, 456 nm, 521 nm, 608 nm und 730 nm herausgefiltert.

Anhand der detektierten Bilddaten wurden charakteristische Parameter der Leiterbahnen extrahiert. So ist in Fig. 1 die Intensitätsverteilung - ein sogenanntes Profil - an einer Stelle der beiden Leiterbahnen quer dazu in Abhängigkeit der Position aufgetragen. Dementsprechend wird bei der Vermessung von Leiterbahnen als charakteristischer Parameter der Intensitätsverlauf entlang einer Geraden senkrecht zur Leiterbahn extrahiert.

Anhand der in Fig. 1 gezeigten Profile wird nun die Linienbreite der Leiterbahnen bestimmt. Hierzu werden die einzelnen Kanten der Leiterbahn berechnet, und zwar wird die Position einer Kante dort festgelegt, wo der 50%-Wert bezogen zur Differenz von Maximum zu Minimum des Kantenübergangs ist. Sobald die Kantenpositionen bestimmt sind, wird die Breite der jeweiligen Leiterbahn aus der Differenz zwischen erster Kante und zweiter Kante berechnet.

Fig. 2 zeigt ein Diagramm in den die gemessenen Linienbreiten der Leiterbahnen - extrahiert aus den Intensitätsverläufen aus Fig. 1 - als Funktion der gemessenen Wellenlänge aufgetragen sind. Da die Wellenlänge des Lichts direkt mit dem Auflösungsvermögen des Abbildungssystems zusammenhängt, ist sozusagen die gemessene Linienbreite der Leiterbahnen als Funktion des Auflösungsvermögens in Fig. 2 gezeigt. An die extrahierten Werte wurde eine Approximationsfunktion der Form

$$B(\lambda) = a\lambda + b + ce^{d\lambda}$$

angepasst.

Bei der Anpassung wurden hierbei die Werte a, b, c und d derart bestimmt, dass die Approximationsfunktion die extrahierten Werte möglichst gut beschreibt. λ ist hierbei die jeweilige Wellenlänge des verwendeten Lichts.

Anhand der so ermittelten Approximationsfunktion kann nun die Linienbreite der detektierten Leitbahnen in einem Bereich des Auflösungsvermögens des Halbleiterinspektionsmikroskops angegeben werden, bei dem nicht detektiert wurde, so beispielsweise bei einer Wellenlänge von 670 nm. Weiterhin kann in besonders vorteilhafter Weise die Linienbreite der Leiterbahn bei einer Wellenlänge des Lichts und damit bei einem Auflösungsvermögen des Abbildungssystems angegeben werden, bei dem überhaupt keine Messung erfolgt ist bzw. erfolgen kann. Die Angabe bzw. die Bestimmung der entsprechenden Linienbreite der Leiterbahn wird mit Hilfe einer Extrapolation der Approximationsfunktion durchgeführt.

Die ausgefüllten fünf Symbole aus Fig. 2 entsprechen den extrahierten Werten der Breite der Leiterbahnen. Die drei X-Symbole entsprechen simulierten Werten, die in detaillierter Kenntnis der Eigenschaften des Abbildungssystems und in Kenntnis des Objekts berechnet wurden. Diese simulierten Werte sind zur Überprüfung der Übereinstimmung des vorliegenden erfindungsgemäßen Verfahrens mit der mikroskopischen Abbildungstheorie in das gleiche Diagramm eingezeichnet. Die folgende Tabelle zeigt die Wellenlänge der Simulationsrechnung und den Fehler, der dem Abstand der simulierten Werte zur Approximationsfunktion aus Fig. 2 entspricht.

| λ [nm] | Fehler [nm] |
|--------|-------------|
| 304    | 0,12        |
| 228    | 0,35        |
| 183    | 0,54        |
| 0      | 2,13        |

Somit kann in besonders vorteilhafter Weise mit dem erfindungsgemäßen Verfahren zu einer "unmöglichen" Auflösung - z.B. einer Detektion mit Licht der Wellenlänge 0 nm - hin extrapoliert werden, wobei der Fehler hierbei ungefähr 2 nm beträgt.

Abschließend sei ganz besonders darauf hingewiesen, dass die voranstehend erörterten Ausführungsbeispiele lediglich zur Beschreibung der beanspruchten Lehre dienen, diese jedoch nicht auf die Ausführungsbeispiele einschränken.

**Patentansprüche**

1. Verfahren zur Detektion eines Objekts, mit einer das Objekt beleuchtenden Lichtquelle und einem das Objekt auf einen Detektor abbildenden Abbildungssystem,
   wobei

   - das Objekt mehrmals mit jeweils unterschiedlicher Auflösung des Abbildungssystems detektiert wird,
   - aus der Detektion mindestens ein Wert des Objekts in Abhängigkeit vom der unterschiedlichen Auflösung gewonnen wird, und
   - an den mindestens einen gewonnenen Wert des Objekts eine Approximationsfunktion angepasst wird, wobei ein optimiertes Auflösungsvermögen erzielt wird und die detektierten Bilddaten einer statistischen und/oder numerischen Auswertung zugeführt werden, wobei Werte des Objekts bei einer Auflösung erhalten werden, bei der nicht detektiert worden ist.

2. Verfahren nach Anspruch 1, wobei die Werte des Objekts

- ein Rand oder eine Fläche des Objekts und/oder
- ein Intensitätsverlauf entlang einer Kurve durch das Objekt und/oder
- die Lokalisation des Objekts oder eines Teils davon, sind.

3. Verfahren nach Anspruch 1, wobei die Werte des Objekts mit Approximationsfunktion $B(\lambda) = a\lambda + b + ce^{d\lambda}$ angepasst werden, wobei Werte für a, b, c und d derart bestimmt werden, dass die Approximationsfunktion die extrahierten Werte möglichst gut beschreibt und $\lambda$ ist die jeweilige Wellenlänge des verwendeten Lichts.

4. Verfahren nach Anspruch 1, wobei zur Variation des Auflösungsvermögens des Abbildungssystems die Wellenlänge des Beleuchtungslichts verändert wird.

5. Verfahren nach Anspruch 1, wobei mit mindestens einem Mittel das Auflösungsvermögen des Abbildungssystems variiert wird.

6. Verfahren nach Anspruch 5, wobei, als Mittel eine im Strahlengang des Abbildungssystems angeordnete Aperturblende mit variablem Durchmesser dient.

7. Verfahren nach einem der Ansprüche 1 bis 6, wobei die Auflösung der detektierten Bilder mit Methoden der digitalen Bildverarbeitung verschlechtert wird, vorzugsweise durch Zusammenfassung mehrerer Pixel, Tiefpassfilterung der Bilder oder Faltung der Bilder mit Funktionen.

8. Verfahren nach einem der Ansprüche 1 bis 7, wobei bei einem eingestellten Auflösungsvermögen des Abbildungssystems das Objekt mehrmals detektiert wird.

9. Verwendung des Verfahrens gemäß den Ansprüchen 1 bis 8 bei einem Koordinaten-Messgerät.

**Claims**

1. A method for detecting an object, comprising a light source which illuminates the object and an imaging system which images the object onto a detector, wherein

- the object is detected a number of times, each time with a different resolution of the imaging system,
- from the detection at least one value of the object is obtained as a function of the different resolution, and
- an approximation function is adapted to the at least one value which is obtained of the object, wherein an optimized resolution capability is achieved and the detected image data are fed to a statistical and/or numerical evaluation, wherein values of the object are obtained at a resolution at which no detection was carried out.

2. The method according to claim 1, wherein the values of the object are

- a boundary or a surface area of the object and/or
- an intensity profile along a curve through the object and/or
- the localization of the object or of a part thereof.

3. The method according to claim 1, wherein the values of the object are adapted with the approximation function $B(\lambda) = a\lambda + b + ce^{d\lambda}$, wherein values for a, b, c and d are determined in such a way that the approximation function describes the extracted values as well as possible, and $\lambda$ is the respective wavelength of the light that is used.

4. The method according to claim 1, wherein the wavelength of the illumination light is changed in order to vary the resolution capability of the imaging system.

5. The method according to claim 1, wherein the resolution capability of the imaging system is varied by at least one means.

6. The method according to claim 5, wherein an aperture diaphragm of variable diameter which is arranged in the beam path of the imaging system serves as means.

7. The method according to any one of claims 1 to 6, wherein the resolution of the detected images is impaired by digital image processing methods, preferably by combining a number of pixels, low-pass filtering of the images or convolution of the images with functions.

8. The method according to any one of claims 1 to 7, wherein the object is detected a number of times at a set resolution capability of the imaging system.

9. The use of the method according to claims 1 to 8 in a coordinate measuring device.

## Revendications

1. Procédé de détection d'un objet, avec une source lumineuse qui éclaire l'objet et un système d'imagerie qui forme l'image de l'objet sur un détecteur, dans lequel

   - l'objet est détecté à plusieurs reprises, chaque fois avec une résolution différente du système d'imagerie,
   - est extraite de la détection au moins une valeur de l'objet en fonction de la résolution différente, et
   - une fonction d'approximation est ajustée à la ou aux valeurs de l'objet extraite, étant donné qu'on obtient un pouvoir de résolution optimisé, et les données d'image détectées sont utilisées pour une évaluation statistique et/ou numérique, étant donné qu'on obtient des valeurs de l'objet à une résolution à laquelle rien n'a été détecté.

2. Procédé selon la revendication 1, dans lequel les valeurs de l'objet sont

   - un bord ou une surface de l'objet et/ou
   - une variation d'intensité le long d'une courbe à travers l'objet et/ou
   - la localisation de l'objet ou d'une partie de celui-ci.

3. Procédé selon la revendication 1, dans lequel les valeurs de l'objet sont ajustées avec la fonction d'approximation $B(\lambda) = a\lambda + b + ce^{d\lambda}$, des valeurs de a, b, c et d étant déterminées de façon que la fonction d'approximation décrive le mieux possible les valeurs extraites et $\lambda$ étant la longueur d'onde respective de la lumière utilisée.

4. Procédé selon la revendication 1, dans lequel, pour faire varier le pouvoir de résolution du système d'imagerie, on change la longueur d'onde de la lumière d'éclairage.

5. Procédé selon la revendication 1, dans lequel on utilise au moins un moyen pour faire varier le pouvoir de résolution du système d'imagerie.

6. Procédé selon la revendication 5, dans lequel le moyen utilisé est un diaphragme d'ouverture de diamètre variable disposé dans le trajet des rayons du système d'imagerie.

7. Procédé selon l'une quelconque des revendications 1 à 6, dans lequel la résolution des images détectées est dégradée à l'aide de méthodes du traitement numérique d'images, de préférence par regroupement de plusieurs pixels, filtrage passe-bas des images ou convolution des images avec des fonctions.

8. Procédé selon l'une quelconque des revendications 1 à 7, dans lequel l'objet est détecté à plusieurs reprises avec un pouvoir de résolution réglé du système d'imagerie.

9. Utilisation du procédé selon les revendications 1 à 8 dans un appareil de mesure de coordonnées.

Fig. 1

EP 1 273 878 B1

Fig. 2

## IN DER BESCHREIBUNG AUFGEFÜHRTE DOKUMENTE

**In der Beschreibung aufgeführte Patentdokumente**

- DE 19819492752
- US 6151127 A
- US 6031661 A
- WO 9637797 A